# EUROPÄISCHE PATENTSCHRIFT

(11) **EP 3 368 794 B1**
(45) Veröffentlichungstag und Bekanntmachung des Hinweises auf die Patenterteilung: **09.12.2020**
(21) Anmeldenummer: 16784400.0
(22) Anmeldetag: 18.10.2016
(51) Int. Cl.: F16H 57/00, F16H 1/20, F16H 57/12

(54) **GETRIEBE, AUFWEISEND EIN GETRIEBEGEHÄUSE**
GEARING, HAVING A GEARING HOUSING
TRANSMISSION PRÉSENTANT UN BOÎTIER DE TRANSMISSION

(30) Priorität: 27.10.2015 DE 102015013901
(43) Veröffentlichungstag der Anmeldung: 05.09.2018
(73) Patentinhaber: SEW-Eurodrive GmbH & Co, 76646 Bruchsal (DE)
(72) Erfinder: DOLEJS, Jiri, 253 01 Hostivice (CZ)
(86) Internationale Anmeldenummer: PCT/EP2016/025119
(87) Internationale Veröffentlichungsnummer: WO 2017/071818

(56) Entgegenhaltungen:
- DE-B- 1 077 160
- DE-C- 483 025
- GB-A- 222 444
- GB-A- 191 509 138

## Beschreibung

Die Erfindung betrifft ein Getriebe, aufweisend ein Getriebegehäuse.

Es ist allgemein bekannt, dass Getriebe ein Getriebegehäuse aufweisen, in welchem Lager zur Lagerung von Wellen vorgesehen sind, mit denen Verzahnungsteile drehfest verbunden sind.

Aus der GB 09138 A ist als nächstliegender Stand der Technik ein Getriebe mit Leistungsverzweigung bekannt.

Aus der DE 10 77 160 B ist ein Kopfgetriebe für Windkraftanlagen bekannt.

Aus der GB 222 444 A ist ebenfalls ein Getriebe mit Leistungsverzweigung bekannt.

Aus der DE 483 025 C ist ein rückkehrendes Zahnrädergetriebe bekannt.

Der Erfindung liegt daher die Aufgabe zugrunde, ein Getriebe in kostengünstiger Weise für hohe Leistungen beziehungsweise Abtriebsdrehmomente auszubilden.

Erfindungsgemäß wird die Aufgabe bei dem Getriebe, aufweisend ein Getriebegehäuse, nach den in Anspruch 1 angegebenen Merkmalen gelöst.

Wichtige Merkmale der Erfindung bei dem Getriebe sind, dass es ein Getriebegehäuse aufweist zur Bildung eines ersten Drehmomentübertragungspfads und/oder Leistungszweiges,
- eine eintreibende, mittels im Getriebegehäuse aufgenommener Lager gelagerte Welle mit zumindest einem drehfest verbunden Verzahnungsteil,
- eine mittels im Getriebegehäuse aufgenommener Lager gelagerte Hohlwelle mit zumindest einem drehfest verbunden Verzahnungsteil,
- eine mittels im Getriebegehäuse aufgenommener Lager gelagerte weitere Hohlwelle mit zumindest einem drehfest verbunden Zahnrad,
- eine abtreibende, mittels im Getriebegehäuse aufgenommener Lager gelagerte Welle mit zumindest einem drehfest verbunden Verzahnungsteil,
wobei Hohlwelle und weitere Hohlwelle voneinander axial beabstandet sind und mittels eines Torsionsstabes Drehmoment zwischen der Hohlwelle und der weiteren Hohlwelle übertragbar ist.

Von Vorteil ist dabei, dass ein Ausgleich der Fertigungstoleranzen erfolgt und ein Ausgleich der Belastungen der beiden Drehmomentübertragungs-Pfade. Somit können sich die pfeilverzahnten Verzahnungsteile axial selbst zentrieren und trotzdem ist das Drehmoment von der ersten zur zweiten Getriebestufe mittels des Torsionsstabes übertragbar. Auf diese Weise sind die Pfeilverzahnungen der Verzahnungsteile vorteilig einsetzbar. Denn im Gegensatz zur einfachen Schrägverzahnung erzeugt die Pfeilverzahnung bei Drehmomentübertragung keine Axialkraft.

Bei einer vorteilhaften Ausgestaltung weist das Getriebe einen zweiten Drehmomentübertragungspfad auf und/oder das Getriebe ist leistungsverzweigt,
wobei das Getriebe
- eine mittels im Getriebegehäuse aufgenommener Lager gelagerte Hohlwelle des zweiten Pfades mit zumindest einem drehfest verbunden Verzahnungsteil des zweiten Pfades und
- eine mittels im Getriebegehäuse aufgenommener Lager gelagerte weitere Hohlwelle des zweiten Pfades mit zumindest einem drehfest verbunden Zahnrad des zweiten Pfades
aufweist,
wobei auch die Hohlwelle des zweiten Pfades und die weitere Hohlwelle des zweiten Pfades voneinander axial beabstandet sind und mittels eines Torsionsstabes des zweiten Pfades Drehmoment zwischen der Hohlwelle des zweiten Pfades und der weiteren Hohlwelle des zweiten Pfades übertragbar ist. Von Vorteil ist dabei, dass eine Leistungsverzweigung ausführbar ist und die Leistung dabei symmetrisch aufteilbar ist. Jeder Leistungszweig ist somit gleichmäßig belastet.

Bei einer vorteilhaften Ausgestaltung ist der zweite Pfad symmetrisch aufgebaut zum ersten Pfad,
insbesondere so dass die Hohlwelle und die weitere Hohlwelle samt der mit diesen Hohlwellen verbundenen Verzahnungsteile, Lager und Zahnräder der beiden Pfade spiegelsymmetrisch zueinander angeordnet und ausgeführt sind,
wobei die Spiegelebene die Wellenachse der abtreibenden Welle enthält und senkrecht zu der die Wellenachsen der Hohlwelle und der abtreibenden Welle aufnehmenden Ebene ausgerichtet ist. Von Vorteil ist dabei, dass ein einfacher Aufbau des Getriebes ermöglicht ist und die Leistungsverzweigung derart ausgeführt ist, dass jeweils dieselben teile verwendbar sind.

Bei einer vorteilhaften Ausgestaltung sind die Wellenachse der eintreibenden Welle, der abtreibenden Welle, der Hohlwelle, der weiteren Hohlwelle, der Hohlwelle des zweiten Pfades und der weiteren Hohlwelle des zweiten Pfades parallel zueinander ausgerichtet,
insbesondere wobei die Wellenachse der eintreibenden Welle koaxial zur Wellenachse der abtreibenden Welle ausgerichtet ist. Von Vorteil ist dabei, dass die Drehmomentübertragung von der ersten zur zweiten Getriebestufe in einfacher Weise ausführbar ist.

Bei einer vorteilhaften Ausgestaltung ist der Torsionsstab durch die Hohlwelle und die weitere Hohlwelle hindurchgeführt. Von Vorteil ist dabei, dass ein einfacher Aufbau vorgesehen ist. Bei einer vorteilhaften Ausgestaltung ist der Torsionsstab drehfest, insbesondere fest, verbunden ist mit der weiteren Hohlwelle. Von Vorteil ist dabei, dass das von dem Torsionsstab übertragene Drehmoment in einfacher Weise ohne Verluste weiterleitbar ist.

**Erfindungsgemäß** ist der Torsionsstab drehfest aber axial verschiebbar mit einer Buchse verbunden
und/oder die Buchse ist drehfest aber axial verschiebbar mit der Hohlwelle verbunden,
insbesondere wobei die Buchse auf den Torsionsstab aufgesteckt ist. Von Vorteil ist dabei, dass die Buchse als Kupplung wirksam ist, also einen weiteren Ausgleich von Fertigungstoleranzen ermöglicht.

Bei einer vorteilhaften Ausgestaltung ist die Buchse hohl ausgeführt. Von Vorteil ist dabei, dass ein geringes Trägheitsmoment realisierbar ist die Buchse zwischen Hohlwelle und Torsionsstab angeordnet ist. Somit ist keine direkte Berührung der Hohlwelle durch den Torsionsstab ausgeführt und somit die Kupplungswirkung voll wirksam.

Erfindungsgemäß weist die Buchse eine Innenverzahnung zur drehfesten Verbindung mit einer Außenverzahnung des Torsionsstabs auf
und/oder
die Buchse weist eine Außenverzahnung zur drehfesten Verbindung mit einer Innenverzahnung der Hohlwelle auf. Von Vorteil ist dabei, dass die Buchse einteilig ausführbar ist und trotzdem radial beidseitig Verzahnungen vorsehbar sind.

Bei einer vorteilhaften Ausgestaltung ist die Buchse axial, insbesondere in einer ersten Richtung, begrenzt durch eine mit dem Torsionsstab schraubverbundene, insbesondere auf den Torsionsstab aufgeschraubte, Mutter,
insbesondere die Buchse axial in der anderen Richtung begrenzt ist mittels eines Durchmesserstufensprungs des Innendurchmessers der Hohlwelle. Von Vorteil ist dabei,
dass eine beidseitige Begrenzung einfach ausführbar ist und somit das axiale Spiel definierbar ist.

Bei einer vorteilhaften Ausgestaltung ist der Torsionsstab an dem von der Hohlwelle abgewandten axialen Endbereich derart verbreitert, insbesondere radial verbreitert, dass die weitere Hohlwelle durch diese Verbreiterung axial begrenzt ist. Von Vorteil ist dabei, dass eine einfache sicherheitserhöhende Begrenzung ausführbar ist.

Bei einer vorteilhaften Ausgestaltung ist das jeweilige Verzahnungsteil jeweils aus zwei schrägverzahnten Zahnrädern zusammengesetzt, deren Schrägungswinkel der jeweiligen Verzahnung betragsgleich aber unterschiedliches Vorzeichen aufweist,
insbesondere wobei die beiden Zahnräder des jeweiligen Verzahnungsteils mittels axial durchgehender Schrauben lösbar miteinander verbunden sind, insbesondere derart, dass keine Lücke zwischen den Verzahnungen vorhanden ist. Von Vorteil ist dabei, dass eine Selbstzentrierung durchführbar ist, weil Hohlwelle und weitere Hohlwelle relativ zueinander axial verschiebbar angeordnet sind, insbesondere in dem durch die Begrenzungen definierten axialen Bereich.

Bei einer vorteilhaften Ausgestaltung ist das mit der eintreibenden Welle drehfest verbundene Verzahnungsteil im Eingriff mit dem mit der Hohlwelle drehfest verbundenen Verzahnungsteil
und/oder
dass mit der abtreibenden Welle drehfest verbundene Verzahnungsteil ist im Eingriff mit dem mit dem mit der weiteren Hohlwelle drehfest verbundenen Zahnrad und/oder einer Verzahnung der weiteren Hohlwelle. Von Vorteil ist dabei, dass die Pfeilverzahnungen der Verzahnungsteile selbstzentrierend zueinander vorsehbar sind.

Weitere Vorteile ergeben sich aus den Unteransprüchen.

Die Erfindung wird nun anhand von Abbildungen näher erläutert:

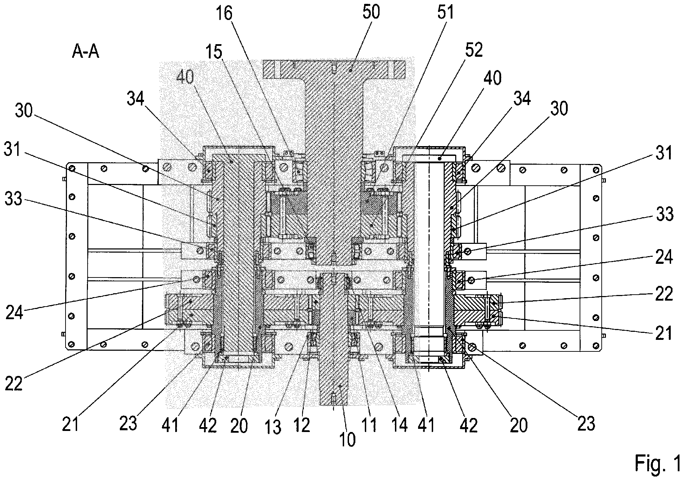

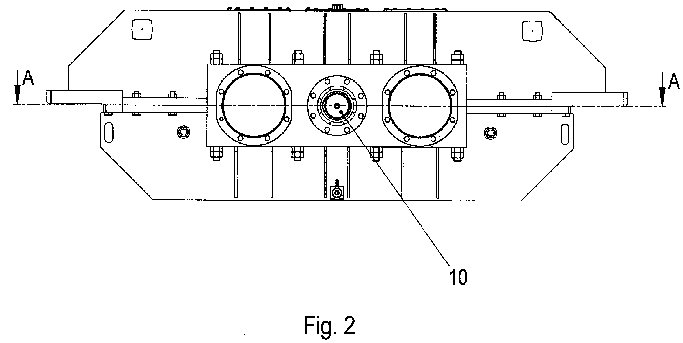

In der Figur 1 ist eine Schnittansicht durch ein erfindungsgemäßes Getriebe dargestellt.

In der Figur ist eine Vorderansicht auf das Getriebe dargestellt.

Wie in den Figuren gezeigt, wird das über die eintreibende Welle 10 eingebrachte Drehmoment verzweigt und über zwei Drehmomentübertragungspfade der abtreibenden Welle 50 zugeleitet. Die beiden Pfade sind symmetrisch zueinander aufgebaut.

Mit der eintreibenden Welle 10 sind ein erstes schrägverzahntes Zahnrad 11 und ein zweites schrägverzahntes Zahnrad 12 drehfest verbunden, wobei die Schrägungswinkel der beiden Zahnräder 11 und 12 zwar denselben Betrag des Schrägungswinkels aufweisen, jedoch unterschiedliches Vorzeichen aufweisen.

Die beiden Zahnräder 11 und 12 sind miteinander verbunden, insbesondere mittels axial durchgehender Schrauben, so dass keine Lücke zwischen den Verzahnungen der beiden Zahnräder (11, 12) vorhanden ist.

Das Zahnrad 11 steht mit einem dritten Zahnrad 21 im Eingriff, das Zahnrad 12 steht mit einem vierten Zahnrad 22 im Eingriff.

Das dritte und vierte Zahnrad (21, 22) sind jeweils auf eine Hohlwelle 20 aufgesteckt und drehfest mit der Hohlwelle 20 verbunden. Darüber hinaus sind die beiden Zahnräder (21, 22) jeweils mit einer entsprechenden Schrägverzahnung versehen und sind miteinander verbunden, insbesondere mittels axial durchgehender Schrauben, so dass keine Lücke zwischen den Verzahnungen der beiden Zahnräder (21, 22) vorhanden ist.

Die Hohlwelle 20 ist mittels zweier voneinander beabstandeter, im Gehäuse aufgenommener Lager (23, 24) gelagert.

Die eintreibende Welle 10 ist mittels zweier voneinander beabstandeter, im Gehäuse aufgenommener Lager (13, 14) gelagert.

Die abtreibende Welle 50 ist mittels zweier voneinander beabstandeter, im Gehäuse aufgenommener Lager (15, 16) gelagert.

Eine weitere Hohlwelle 30 ist mittels zweier voneinander beabstandeter, im Gehäuse aufgenommener Lager (34, 33) gelagert. Die weitere Hohlwelle ist außerdem koaxial angeordnet zur Hohlwelle 20. Durch beide Hohlwellen (20, 30) ist ein Torsionsstab 40 hindurchgeführt.

Die weitere Hohlwelle 30 weist eine schrägverzahnte Außenverzahnung auf, die im Eingriff steht mit dem Zahnrad 51, welches drehfest mit der abtreibenden Welle 50 verbunden ist und entsprechend schrägverzahnt ist. Außerdem ist das Zahnrad 51 mit dem Zahnrad 52 mittels axial durchgehender Schrauben verbunden, so dass keine Lücke zwischen den Verzahnungen der beiden Zahnräder (51, 52) vorhanden ist. Ein siebtes Zahnrad 31 ist wiederum schrägverzahnt, ist drehfest mit der weiteren Hohlwelle 30 verbunden und steht im Eingriff mit
Die Schrägungswinkel der beiden Zahnräder 51 und 52 weisen zwar denselben Betrag des Schrägungswinkels auf, jedoch mit jeweils unterschiedlichem Vorzeichen.

Der Torsionsstab 40 ist an seinem ersten axialen Endbereich axial verbreitert, so dass die an der Verbreiterung des Torsionsstabs 40 anliegende weitere Hohlwelle 30 axial begrenzt ist.

Der Torsionsstab 40 ist drehfest mit der weiteren Hohlwelle 30 verbunden. Vorzugsweise ist der Torsionsstab 40 hierzu fest verbunden mit der weiteren Hohlwelle 30, beispielsweise schweißverbunden und/oder schraubverbunden.

Im anderen axialen Endbereich weist der Torsionsstab 40 eine Verzahnung auf, die mit einer Innenverzahnung einer Buchse 41, insbesondere Hülse, im Eingriff steht. Die Verzahnung und die Innenverzahnung erstrecken sich in axialer Richtung. Somit ist die Buchse 41 drehfest, aber axial verschiebbar verbunden mit dem Torsionsstab 40.

Die Buchse weist auch eine Außenverzahnung auf, welche mit einer Innenverzahnung der Hohlwelle 20 im Eingriff steht, wobei diese beiden Verzahnungen ebenfalls sich in axialer Richtung erstrecken, so dass die Buchse 41 und die Hohlwelle 20 drehfest aber axial verschiebbar angeordnet sind.

Mittels des Torsionsstabs ist ein axialer Ausgleich der weiteren Hohlwelle 30 und Hohlwelle 20 ermöglicht. Außerdem ist ein Lastausgleich zwischen den beiden Pfaden erreichbar. Somit ist auch eine kinematisch korrekte Verbindung der beiden, symmetrisch zueinander aufgebauten Pfade ohne Vorspannung oder Vorbelastung ermöglicht.

Dabei sind die beiden Pfade derart aufgebaut, dass die Wellenachsen der Hohlwelle 20 des ersten und zweiten Pfades, der weiteren Hohlwelle 30 des ersten und zweiten Pfades, der eintreibenden Welle 10 und der abtreibenden Welle 10 parallel zueinander angeordnet sind und in einer gemeinsamen Ebene angeordnet sind. Dabei sind die Wellenachsen der eintreibenden Welle 10 und der abtreibenden Welle 10 koaxial zueinander ausgerichtet.

Das Verhältnis der Zähnezahl der Innen Verzahnung der Buchse 41 und der Zähnezahl der Außenverzahnung der Buchse 41 ist prim zueinander. Die beiden Zähnezahlen weisen also keinen gemeinsamen ganzzahligen Teiler auf, der größer ist als Eins. Auf diese Weise ist bei der Herstellung, also dem Einfügen der Buchse 41, die Drehstellung der Buchse 41 zu finden, ohne dass irgendeine Indexposition notwendig ist.

Die Position der Buchse 41 ist mit einer mit dem Torsionsstab 40, an dessen von der zweiten Getriebestufe abgewandten Endbereich schraubverbundenen Mutter 42 gesichert. Hierzu weist der Torsionsstab 40 in diesem Endbereich ein Außengewinde auf. Die Mutter 42 begrenzt somit die Buchse 41 axial.

Die eintreibenden Welle 10 und die abtreibende Welle 50 sind voneinander axial beabstandet. Darüber hinaus sind auch die Hohlwelle 20 und die weitere Hohlwelle 30 des ersten Pfades voneinander beabstandet. Auch die Hohlwelle 20 und die weitere Hohlwelle 30 des zweiten Pfades sind axial voneinander beabstandet.

Somit sind also die erste Getriebestufe, umfassend die Hohlwelle 20 mit ihren Zahnrädern 11, 12, 21, 22 und eintreibende Welle 10, und die die zweite Getriebestufe, umfassend die Hohlwelle 30 mit den Zahnrädern 31, 51, 52 und abtreibende Welle 50, voneinander separat und axial unabhängig im Getriebegehäuse aufgenommen.

Die Durchleitung des Drehmoments von der ersten zur zweiten Getriebestufe erfolgt über den Torsionsstab 40. Dies erlaubt eine flexible Verbindung, welche die Eliminierung oder den Ausgleich von Lastspitzen, insbesondere Last-Drehmomentschocks, ebenso bereit stellt wie den Ausgleich von Fertigungstoleranzen.

### Bezugszeichenliste

- 10: Eintriebswelle
- 11: erstes Zahnrad mit Schrägverzahnung
- 12: zweites Zahnrad mit Schrägverzahnung
- 13: Lager
- 14: Lager
- 15: Lager
- 16: Lager
- 20: Hohlwelle
- 21: drittes Zahnrad mit Schrägverzahnung
- 22: viertes Zahnrad mit Schrägverzahnung
- 23: Lager
- 24: Lager
- 30: Hohlwelle mit Schrägverzahnung
- 31: siebtes Zahnrad mit Schrägverzahnung
- 33: Lager
- 34: Lager
- 40: Torsionsstab
- 41: Buchse, insbesondere Hülse
- 42: Mutter
- 50: Abtriebswelle
- 51: fünftes Zahnrad mit Schrägverzahnung
- 52: sechstes Zahnrad mit Schrägverzahnung

## Patentansprüche

1. Getriebe, aufweisend ein Getriebegehäuse zur Bildung eines ersten Drehmomentübertragungspfads und/oder Leistungszweiges,
- eine eintreibende, mittels im Getriebegehäuse aufgenommener Lager (13) gelagerte Welle (10) mit zumindest einem drehfest verbunden Verzahnungsteil (11),
- eine mittels im Getriebegehäuse aufgenommener Lager (23) gelagerte Hohlwelle (20) mit zumindest einem drehfest verbunden Verzahnungsteil (21),
- eine mittels im Getriebegehäuse aufgenommener Lager (34) gelagerte weitere Hohlwelle (30) mit zumindest einem drehfest verbunden Zahnrad (31),
- eine abtreibende, mittels im Getriebegehäuse aufgenommener Lager (16) gelagerte Welle (50) mit zumindest einem drehfest verbunden Verzahnungsteil (51),
wobei Hohlwelle (20) und weitere Hohlwelle (30) voneinander axial beabstandet sind und mittels eines Torsionsstabes (40) Drehmoment zwischen der Hohlwelle (20) und der weiteren Hohlwelle (30) übertragbar ist,
**dadurch gekennzeichnet, dass**
der Torsionsstab (40) drehfest aber axial verschiebbar mit einer Buchse (41) verbunden ist und/oder die Buchse (41) drehfest aber axial verschiebbar mit der Hohlwelle verbunden ist,
- wobei die Buchse (41) eine Innenverzahnung zur drehfesten Verbindung mit einer Außenverzahnung des Torsionsstabs (40) aufweist,
- und/oder wobei die Buchse (41) eine Außenverzahnung zur drehfesten Verbindung mit einer Innenverzahnung der Hohlwelle aufweist.

2. Getriebe nach Anspruch 1,
**dadurch gekennzeichnet, dass**
das Getriebe einen zweiten Drehmomentübertragungspfad aufweist und/oder das Getriebe leistungsverzweigt ist,
wobei das Getriebe
- eine mittels im Getriebegehäuse aufgenommener Lager (23) gelagerte Hohlwelle (20) des zweiten Pfades mit zumindest einem drehfest verbunden Verzahnungsteil (22) des zweiten Pfades und
- eine mittels im Getriebegehäuse aufgenommener Lager (34) gelagerte weitere Hohlwelle (30) des zweiten Pfades mit zumindest einem drehfest verbunden Zahnrad (31) des zweiten Pfades
aufweist,
wobei auch die Hohlwelle (20) des zweiten Pfades und die weitere Hohlwelle (30) des zweiten Pfades voneinander axial beabstandet sind und mittels eines Torsionsstabes (40) des zweiten Pfades Drehmoment zwischen der Hohlwelle (20) des zweiten Pfades und der weiteren Hohlwelle (30) des zweiten Pfades übertragbar ist.

3. Getriebe nach mindestens einem der vorangegangenen Ansprüche,
**dadurch gekennzeichnet, dass**
der zweite Pfad symmetrisch aufgebaut ist zum ersten Pfad,
insbesondere so, dass die Hohlwelle (20) und die weitere Hohlwelle (30) samt der mit diesen Hohlwellen (20, 30) verbundenen Verzahnungsteilen (21, 22, 31), Lagern (23, 34) und Zahnrädern (21, 22) der beiden Pfade spiegelsymmetrisch zueinander angeordnet und ausgeführt sind,
wobei die Spiegelebene die Wellenachse der abtreibenden Welle (50) enthält und senkrecht zu der die Wellenachsen der Hohlwelle und der abtreibenden Welle (50) aufnehmenden Ebene ausgerichtet ist.

4. Getriebe nach mindestens einem der vorangegangenen Ansprüche,
**dadurch gekennzeichnet, dass**
die Wellenachse der eintreibenden Welle (10), der abtreibenden Welle (50), der Hohlwelle (20), der weiteren Hohlwelle (30), der Hohlwelle (20) des zweiten Pfades und der weiteren Hohlwelle (30) des zweiten Pfades parallel zueinander ausgerichtet sind,
insbesondere wobei die Wellenachse der eintreibenden Welle (10) koaxial zur Wellenachse der abtreibenden Welle (50) ausgerichtet ist.

5. Getriebe nach mindestens einem der vorangegangenen Ansprüche,
**dadurch gekennzeichnet, dass**
der Torsionsstab (40) durch die Hohlwelle (20) und die weitere Hohlwelle (30) hindurchgeführt ist.

6. Getriebe nach mindestens einem der vorangegangenen Ansprüche,
**dadurch gekennzeichnet, dass**
der Torsionsstab (40) drehfest, insbesondere fest, verbunden ist mit der weiteren Hohlwelle (30).

7. Getriebe nach mindestens einem der vorangegangenen Ansprüche,
**dadurch gekennzeichnet, dass**
die Buchse (41) auf den Torsionsstab (40) aufgesteckt ist.

8. Getriebe nach mindestens einem der vorangegangenen Ansprüche,
**dadurch gekennzeichnet, dass**
die Buchse (41) hohl ausgeführt ist.

9. Getriebe nach mindestens einem der vorangegangenen Ansprüche,
**dadurch gekennzeichnet, dass**
die Buchse (41) axial, insbesondere in einer ersten Richtung, begrenzt ist durch eine mit dem Torsionsstab (40) schraubverbundene, insbesondere auf den Torsionsstab (40) aufgeschraubte, Mutter (42).

10. Getriebe nach Anspruch 9,
**dadurch gekennzeichnet, dass**
die Buchse (41) axial in der anderen Richtung begrenzt ist mittels eines Durchmesserstufensprungs des Innendurchmessers der Hohlwelle (20).

11. Getriebe nach mindestens einem der vorangegangenen Ansprüche,
**dadurch gekennzeichnet, dass**
der Torsionsstab (40) an dem von der Hohlwelle (20) abgewandten axialen Endbereich derart verbreitert ist, insbesondere radial verbreitert ist, dass die weitere Hohlwelle (30) durch diese Verbreiterung axial begrenzt ist.

12. Getriebe nach mindestens einem der vorangegangenen Ansprüche,
**dadurch gekennzeichnet, dass**
die Verzahnungsteile (20, 21, 31) pfeilverzahnt und/oder zweiteilig sind,
und/oder dass
das jeweilige Verzahnungsteil jeweils aus zwei schrägverzahnten Zahnrädern (21, 22, 31) zusammengesetzt ist, deren Schrägungswinkel der jeweiligen Verzahnung betragsgleich aber unterschiedliches Vorzeichen aufweist,
insbesondere wobei die beiden Zahnräder (21, 22, 31) des jeweiligen Verzahnungsteils mittels axial durchgehender Schrauben lösbar miteinander verbunden sind, insbesondere derart, dass keine Lücke zwischen den Verzahnungen vorhanden ist.

13. Getriebe nach mindestens einem der vorangegangenen Ansprüche,
**dadurch gekennzeichnet, dass**
das mit der eintreibenden Welle (10) drehfest verbundene Verzahnungsteil im Eingriff ist mit dem mit der Hohlwelle (20) drehfest verbundenen Verzahnungsteil (21, 22)
und/oder dass
das mit der abtreibenden Welle (50) drehfest verbundene Verzahnungsteil im Eingriff ist mit dem mit dem mit der weiteren Hohlwelle (30) drehfest verbundenen Zahnrad (12) und/oder einer Verzahnung der weiteren Hohlwelle (30).

## Claims

1. A gear unit, having a gear unit casing for forming a first torque transmission path and/or power arm,
- an input shaft (10), which is mounted by means of bearings (13) accommodated in the gear unit casing, with at least one non-rotatably connected toothed part (11),
- a hollow shaft (20), which is mounted by means of bearings (23) accommodated in the gear unit casing, with at least one non-rotatably connected toothed part (21),
- a further hollow shaft (30), which is mounted by means of bearings (34) accommodated in the gear unit casing, with at least one non-rotatably connected gear wheel (31),
- an output shaft (50), which is mounted by means of bearings (16) accommodated in the gear unit casing, with at least one non-rotatably connected toothed part (51),
wherein the hollow shaft (20) and further hollow shaft (30) are axially spaced apart from each other, and torque can be transmitted between the hollow shaft (20) and the further hollow shaft (30) by means of a torsion bar (40),
**characterised in that**
the torsion bar (40) is connected non-rotatably but axially displaceably to a bush (41) and/or the bush (41) is connected non-rotatably but axially displaceably to the hollow shaft,
- the bush (41) having internal gearing for non-rotatably connecting to external gearing of the torsion bar (40),
- and/or the bush (41) having external gearing for non-rotatably connecting to internal gearing of the hollow shaft.

2. A gear unit according to Claim 1,
**characterised in that**
the gear unit has a second torque transmission path and/or the gear unit is power-split, wherein the gear unit has
- a hollow shaft (20) of the second path which is mounted by means of bearings (23) accommodated in the gear unit casing, with at least one non-rotatably connected toothed part (22) of the second path, and
- a further hollow shaft (30) of the second path which is mounted by means of bearings (34) accommodated in the gear unit casing, with at least one non-rotatably connected gear wheel (31) of the second path,
wherein the hollow shaft (20) of the second path and the further hollow shaft (30) of the second path are also axially spaced apart from each other and torque can be transmitted between the hollow shaft (20) of the second path and the further hollow shaft (30) of the second path by means of a torsion bar (40) of the second path.

3. A gear unit according to at least one of the preceding claims,
**characterised in that**
the second path is constructed symmetrically to the first path,
in particular such that the hollow shaft (20) and the further hollow shaft (30) plus the toothed parts (21, 22, 31) connected to these hollow shafts (20, 30), bearings (23, 34) and gear wheels (21, 22) of the two paths are arranged and formed mirror-symmetrically to each other,
the plane of symmetry containing the shaft axis of the output shaft (50) and being oriented perpendicularly to the plane accommodating the shaft axes of the hollow shaft and the output shaft (50).

4. A gear unit according to at least one of the preceding claims,
**characterised in that**
the shaft axes of the input shaft (10), the output shaft (50), the hollow shaft (20), the further hollow shaft (30), the hollow shaft (20) of the second path and the further hollow shaft (30) of the second path are oriented parallel to each other,
in particular the shaft axis of the input shaft (10) being oriented coaxially to the shaft axis of the output shaft (50).

5. A gear unit according to at least one of the preceding claims,
**characterised in that**
the torsion bar (40) is passed through the hollow shaft (20) and the further hollow shaft (30).

6. A gear unit according to at least one of the preceding claims,
**characterised in that**
the torsion bar (40) is connected non-rotatably, in particular in fixed manner, to the further hollow shaft (30).

7. A gear unit according to at least one of the preceding claims,
**characterised in that**
the bush (41) is pushed onto the torsion bar (40).

8. A gear unit according to at least one of the preceding claims,
**characterised in that**
the bush (41) is formed hollow.

9. A gear unit according to at least one of the preceding claims,
**characterised in that**
the bush (41) is limited axially, in particular in a first direction, by a nut (42) screw-connected to the torsion bar (40), in particular screwed onto the torsion bar (40).

10. A gear unit according to Claim 9,
**characterised in that**
the bush (41) is limited axially in the other direction by means of a diameter gradation of the internal diameter of the hollow shaft (20).

11. A gear unit according to at least one of the preceding claims,
**characterised in that**
the torsion bar (40) at the axial end region facing away from the hollow shaft (20) is widened, in particular radially widened, such that the further hollow shaft (30) is axially limited by this widened portion.

12. A gear unit according to at least one of the preceding claims,
**characterised in that**
the toothed parts (20, 21, 31) are herringbone-toothed and/or in two parts,
and/or **in that**
the respective toothed part in each case is composed of two helically-geared gear wheels (21, 22, 31), the helix angle of which is equal in amount to the respective gearing but has a different sign,
in particular with the two gear wheels (21, 22, 31) of the respective toothed part being detachably connected together by means of axially uninterrupted screws, in particular such that no gap is present between the sets of gearing.

13. A gear unit according to at least one of the preceding claims,
**characterised in that**
the toothed part which is connected non-rotatably to the input shaft (10) is engaged with the toothed part (21, 22) which is non-rotatably connected to the hollow shaft (20)
and/or **in that**
the toothed part which is connected non-rotatably to the output shaft (50) is engaged with the gear wheel (12) connected non-rotatably to the [to the] further hollow shaft (30) and/or gearing of the further hollow shaft (30).

## Revendications

1. Transmission comprenant un carter
en vue de former un premier trajet de transmission d'un couple de rotation et/ou une première ramification de puissance,
- un arbre d'entrée (10), monté au moyen de paliers (13) logés dans le carter de la transmission et muni d'au moins une partie dentée (11) reliée avec verrouillage rotatif,
- un arbre creux (40), monté au moyen de paliers (23) logés dans ledit carter de la transmission et pourvu d'au moins une partie dentée (21) reliée avec verrouillage rotatif,
- un arbre creux supplémentaire (30), monté au moyen de paliers (34) logés dans ledit carter de la transmission et doté d'au moins une roue dentée (31) reliée avec verrouillage rotatif,
- un arbre de sortie (50), monté au moyen de paliers (16) logés dans ledit carter de la transmission et nanti d'au moins une partie dentée (51) reliée avec verrouillage rotatif,
sachant que l'arbre creux (20) et l'arbre creux supplémentaire (30) sont espacés l'un de l'autre dans le sens axial, et qu'un couple de rotation peut être transmis entre ledit arbre creux (20) et ledit arbre creux supplémentaire (30), au moyen d'une barre de torsion (40), **caractérisée par le fait que**
la barre de torsion (40) est reliée à une douille (41) avec verrouillage rotatif, mais avec faculté de déplacement axial, et/ou ladite douille (41) est reliée à l'arbre creux avec verrouillage rotatif, mais avec faculté de déplacement axial,
- la douille (41) comportant une denture intérieure en vue d'assurer le rattachement, avec verrouillage rotatif, à une denture extérieure de la barre de torsion (40),
- et/ou ladite douille (41) comportant une denture extérieure en vue d'assurer le rattachement, avec verrouillage rotatif, à une denture intérieure de l'arbre creux.

2. Transmission selon la revendication 1,
**caractérisée par le fait que**
ladite transmission comporte un second trajet de transmission d'un couple de rotation, et/ou ladite transmission présente une ramification de puissance,
laquelle transmission comprend
- un arbre creux (20) du second trajet, monté au moyen de paliers (23) logés dans le carter de ladite transmission et muni d'au moins une partie dentée (22) dudit second trajet, reliée avec verrouillage rotatif, et
- un arbre creux supplémentaire (30) dudit second trajet, monté au moyen de paliers (34) logés dans ledit carter de la transmission et pourvu d'au moins une roue dentée (31) dudit second trajet, reliée avec verrouillage rotatif,
sachant que l'arbre creux (20) du second trajet et l'arbre creux supplémentaire (30) dudit second trajet sont pareillement espacés l'un de l'autre dans le sens axial, et qu'un couple de rotation peut être pareillement transmis entre ledit arbre creux (20) du second trajet et ledit arbre creux supplémentaire (30) dudit second trajet, au moyen d'une barre de torsion (40) dudit second trajet.

3. Transmission selon au moins l'une des revendications précédentes,
**caractérisée par le fait que**
l'agencement du second trajet offre une symétrie avec celui du premier trajet,
en particulier de façon telle que l'arbre creux (20) et l'arbre creux supplémentaire (30) soient disposés et réalisés spéculairement l'un par rapport à l'autre conjointement aux parties dentées (21, 22, 31), aux paliers (23, 34) et aux roues dentées (21, 22) des deux trajets, reliés à ces arbres creux (20, 30),
le plan de spécularité contenant l'axe de l'arbre de sortie (50), et étant orienté perpendiculairement au plan qui reçoit les axes de l'arbre creux et dudit arbre de sortie (50).

4. Transmission selon au moins l'une des revendications précédentes,
**caractérisée par le fait que**
les axes de l'arbre d'entrée (10), de l'arbre de sortie (50), de l'arbre creux (20), de l'arbre creux supplémentaire (30), de l'arbre creux (20) du second trajet, et de l'arbre creux supplémentaire (30) dudit second trajet, sont orientés parallèlement les uns aux autres, sachant, en particulier, que l'axe dudit arbre d'entrée (10) est orienté coaxialement à l'axe dudit arbre de sortie (50).

5. Transmission selon au moins l'une des revendications précédentes,
**caractérisée par le fait que**
la barre de torsion (40) parcourt l'arbre creux (20) et l'arbre creux supplémentaire (30) de part en part.

6. Transmission selon au moins l'une des revendications précédentes,
**caractérisée par le fait que**
la barre de torsion (40) est reliée à l'arbre creux supplémentaire (30) avec verrouillage rotatif, en particulier de manière fixe.

7. Transmission selon au moins l'une des revendications précédentes,
**caractérisée par le fait que**
la douille (41) est emboîtée sur la barre de torsion (40).

8. Transmission selon au moins l'une des revendications précédentes,
**caractérisée par le fait que**
la douille (41) est de réalisation creuse.

9. Transmission selon au moins l'une des revendications précédentes,
**caractérisée par le fait que**
la douille (41) est délimitée axialement, en particulier dans une première direction, par un écrou (42) relié par vissage à la barre de torsion (40) et notamment rapporté, par vissage, sur ladite barre de torsion (40).

10. Transmission selon la revendication 9,
**caractérisée par le fait que**
la douille (41) est délimitée axialement, dans l'autre direction, au moyen d'un incrément du diamètre intérieur de l'arbre creux (20).

11. Transmission selon au moins l'une des revendications précédentes,
**caractérisée par le fait que**
la barre de torsion (40) est élargie, notamment élargie dans le sens radial au niveau de la région extrême axiale tournée à l'opposé de l'arbre creux (20), de façon telle que l'arbre creux supplémentaire (30) soit délimité par cet élargissement dans le sens axial.

12. Transmission selon au moins l'une des revendications précédentes,
**caractérisée par le fait que**
les parties dentées (20, 21, 31) présentent des dentures à chevrons et/ou comportent deux parties ;
et/ou **par le fait que**
la partie dentée considérée est composée, à chaque fois, de deux roues dentées (21, 22, 31) à dentures hélicoïdales dont l'angle d'hélice de la denture respective est de valeur identique, mais de signe différent,
sachant notamment que les deux roues dentées (21, 22, 31) de ladite partie dentée considérée sont reliées l'une à l'autre de manière libérable, au moyen de vis axialement ininterrompues, en particulier de façon telle qu'aucun espace interstitiel ne soit présent entre les dentures.

13. Transmission selon au moins l'une des revendications précédentes,
**caractérisée par le fait que**
la partie dentée, reliée à l'arbre d'entrée (10) avec verrouillage rotatif, est en prise avec la partie dentée (21, 22) reliée à l'arbre creux (20) avec verrouillage rotatif ;
et/ou **par le fait que**
la partie dentée, reliée à l'arbre de sortie (50) avec verrouillage rotatif, est en prise avec la roue dentée (12) reliée à l'arbre creux supplémentaire (30) avec verrouillage rotatif, et/ou avec une denture dudit arbre creux supplémentaire (30).
